## Europäisches Patentamt
## European Patent Office
## Office européen des brevets

(19)

(11) Veröffentlichungsnummer: **0 135 132**
**B1**

(12) **EUROPÄISCHE PATENTSCHRIFT**

(45) Veröffentlichungstag der Patentschrift:
**29.10.86**

(51) Int. Cl.⁴: **H 01 B 11/22**, G 02 B 6/44

(21) Anmeldenummer: **84109606.8**

(22) Anmeldetag: **13.08.84**

(54) **Kabel mit Kabelmantel, insbesondere Energiekabel, Verfahren zum Einbringen eines Leitkabels sowie Vorrichtung dazu.**

(30) Priorität: **18.08.83 DE 3329792**

(43) Veröffentlichungstag der Anmeldung:
**27.03.85 Patentblatt 85/13**

(45) Bekanntmachung des Hinweises auf die Patenterteilung:
**29.10.86 Patentblatt 86/44**

(84) Benannte Vertragsstaaten:
**AT CH DE FR GB IT LI NL SE**

(56) Entgegenhaltungen:
**DE - A - 2 414 199**
**DE - A - 2 910 135**
**FR - A - 1 179 521**
**FR - A - 2 441 185**
**US - A - 4 039 248**
**US - A - 4 172 106**

(73) Patentinhaber: **Kabelwerke Brugg A.-G.,**
**Klosterzelgstrasse 28, CH-5200 Brugg (CH)**

(72) Erfinder: **Gyger, Albert, Höli 52, CH-5745 Safenwil (CH)**
Erfinder: **Läuchli, Urs, Remigerhalde 240,**
**CH-5236 Remigen (CH)**
Erfinder: **Borer, Werner, Dr., Neustrasse 254,**
**CH-8247 Flurlingen (CH)**

(74) Vertreter: **Hiebsch, Gerhard F., Dipl.-Ing.,**
**Erzbergerstrasse 5A Postfach 464, D-7700 Singen 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft ein Kabel mit Kabelmantel, insbesondere ein Energiekabel mit zumindest einem elektrischen Leiter und diesen umgebendem Isoliermantel, vor allem ein Dreileiter-Mittelspannungskabel mit von drei Leitern begrenztem Hohlraum. Darüber hinaus erfasst die Erfindung ein Verfahren zum Einbringen eines Leitkabels in das folgend auch als Hauptkabel bezeichnete Kabel.

Allgemein wird unterschieden zwischen nicht isolierten Leitungen, z.B. für Freileitungen, isolieretn Leitungen, welche in der Regel im Erdreich, unter Umständen auch im Wasser, verlegt werden können. Bislang finden derartige Kabel als Energieträger und/oder Nachrichtenübermittler Anwendung, wobei sie eine Vielzahl von Stromleitern, meist aus Kupfer, als Leiter in sich aufnehmen.

In neuerer Zeit werden Nachrichten jedoch auch optisch übertragen, wobei eine Informations- und Bildübertragung mittels streng geordneten Glasfasern erfolgt. Tritt dabei ein Lichtstrahl in eine Faser aus Glas ein, so wird er durch wiederholte Totalreflexion oder Brechung (je nach Fasertyp) zum anderen Phaserende geleitet.

Insbesondere wegen ihrer kleinen Dimensionen und ihrer Neutralität gegenüber elektromagnetischen Einflüssen werden die Glasfasern auch im Zusammenhang mit Energieversorgungseinrichtungen verwendet. Dies gilt z.B. für die Übertragung von Steuer- oder Messsignalen, d.h. als Telefon- oder Videokanal zwischen Stationen od. dgl.

Obwohl demnach die Glasfaser ein sehr weites Anwendungsspektrum erwarten lässt, ist ihr praktischer Einsatz heute mit erheblichen Problemen belastet. Zum einen ist die Glasfaser ein auf mechanische Einflüsse sehr empfindlich reagierendes Element, so dass sehr teure Schutzvorkehrungen getroffen werden müssen. Weiterhin sind Leitkabel aus Glasfasern sehr teuer und im Augenblick noch erheblichen technischen Veränderungen unterworfen, so dass ihr Einsatz in vielen Fällen zwar vorsehbar, aber im Augenblick noch nicht realisierbar erscheint.

Die Erfinder haben sich zum Ziel gesetzt, ein Kabel, insbesondere ein Energiekabel, ein Verfahren und eine Vorrichtung der oben näher bezeichneten Art zu entwickeln, welche die erkannten Nachteile vermeiden. Insbesondere soll ein Leitkabel, beispielsweise aus Glasfasern, einen sehr guten Schutz erfahren und auch nachträglich in verlegte Erdkabel od.dgl. einsetztbar sein.

Zur Lösung dieser Aufgabe führt, dass in dem als Hauptkabel bezeichneten Kabel, insbesondere neben dem Leiter, zumindest ein Leerrohr vorgesehen ist, in welches das Leitkabel mittels eines Führungsmediums eingeführt wird. Ferner betrifft die Erfindung eine Vorrichtung zur Durchführung des erfindungsgemässen Verfahrens.

Bevorzugt für die Aufnahme von Leerrohren finden dabei Hauptkabel zur Energieübertragung Anwendung. Die Leerrohre werden dabei zwischen die Leiter des Hauptkabels in von diesen Leitern gebildete Hohlräume eingelegt oder ggf. auch in von den Adern mit Beiläufen gebildeten Hohlräumen. Diese Beiläufe dienen üblicherweise der Abstützung des Kabelmantels. Auf diese Weise wird die einem Energiekabel immanente Stabilität, welche in der Regel aus der metallischen Struktur seiner Energieleiter resultiert, als Schutz für das Leitkabel bzw. das Leerrohr ausgenützt. Gleichzeitig werden neuerliche Verlegekosten für ein gesondertes Nachrichtenkabel vermieden und auch kein zusätzlicher Platz in einem Kabelkanal für ein gesondertes Nachrichtenkabel beansprucht.

Da die Verlegung eines Kabels, sei es ein Energie- oder ein Nachrichtenkabel, eine sehr langfristige Investition ist, ermöglicht die Erfindung, dass heute schon bei Verlegen eines Energiekabels für ein in Jaren erst durchzuführendes Vorhaben, beispielsweise einer Nachrichtenverkabelung, Vorsorge getroffen wird. Durch das Einbauen eines Leerrohres in eine Energiekabel kann der Platz für ein Glasfaser-Nachrichtenkabel quasi «reserviert» werden. Es ist aber auch möglich, beispielsweise ein Leitkabel einer veralteten Generation nach dem Verfahren aus dem Leerrohr zu entfernen und mittels des Verfahrens wieder ein Leitkabel einer neuen Generation, technisch verbessert, in das Leerrohr einzuführen.

Selbstverständlich lässt sich das Verfahren nicht nur bei Energiekabeln sondern auch bei ausschliesslich aus Nachrichtenleitern bestehenden Kabeln oder in Rohrblockanlagen anwenden, sofern sie mit den entsprechenden Leerrohren versehen sind. Dasselbe gilt auch beispielsweise für Rohrbündelkabel, welche aus einer Vielzahl von leeren Rohren zum Führen von hydraulischen oder pneumatischen Medien (Fluidics) als Signalüberträger bestehen. Dabei können die erfindungsgemässen Leerrohre sowohl zwischen den leeren Rohren aber auch in diesen selbst eingelegt sein.

Ebenso soll erfindungsgemäss das Verfahren nicht nur bei den begrifflich sehr eng definierten Kabeln anwendbar sein, sondern auch bei Leitungen. Ebenso ist es nicht nur auf das Einführen von Leitkabeln aus Glasfaser anwendbar, wobei in diesem Fall das Leerrohr üblicherweise einen Innendurchmesser von etwa 3-7 mm aufweist und aus Polyamid besteht. Als Leitkabel i.S.d. Erfindung werden alle Kabel zur Energie- und Nachrichtenübermittlung verstanden, sei es aus Glasfasern, gleich welcher Art oder Metall oder einem Werkstoff, welcher erst zukünftig einer Energie- oder Nachrichtenübermittlung dient. Als Führungsmedium kann beispielsweise Pressluft verwendet werden oder aber eine, ggf. unter Druck stehende, Flüssigkeit.

Ein besonderes Merkmal der Erfindung liegt darin, dass die Oberfläche des Leitkabels vor dessen Einführung in das Leerrohr vergrössert wird. Es hat sich in der Praxis gezeigt, dass das Leitkabel im Rahmen des Verfahrens über Strecken bis zu 1 000 Metern in dem Leerrohr transportiert werden muss, was durch das erfindungsgemässe Verfahren möglich ist. Hierbei ist es notwendig, dass einmal das Leitkabel bezüglich der Innenwand des Leerrohres eine möglichst geringe Reibungsfläche

bietet, dass andererseits aber das Leitkabel mit einer glatten Oberfläche, beispielsweise einem Kunststoffmantel, der umströmenden Luft zu wenig Widerstand entgegensetzt, so dass diese Luft eine zu geringe Zugkraft ausüben kann. Um diesen Nachteil zu beheben, wird das Leitkabel beispielsweise mit zwei gegenläufigen Fäden umsponnen. Diese Fäden dienen als Barrieren, so dass die Pressluft auf sie eine Schubwirkung ausübt. Das Leitkabel gleitet so in der Pressluft in dem Leerrohr wie in einem Luftkissen. Eine Beschädigung des Leitkabels, insbesondere wenn es aus Glasfasern besteht, wird vermieden. Ebenso nimmt die beim üblichen Verseilen einzelner Glasfasern zu Glasfaserkabeln beobachtete Dämpfung der Glasfaser nicht zu.

Anstelle der Fäden kann auf die Oberfläche des Leitkabels auch ein Haftpulver unter Zuhilfenahme elektrostatischer Kräfte aufgebracht oder die Oberfläche beflockt werden. Ebenfalls ist es möglich, das Leitkabel mit einem sehr dünnen Draht zu umwickeln. Sollte das Leitkabel noch einen Kunststoffmantel aufweisen, so kann die Oberflächenvergrösserung durch Ausformen von Vorsprüngen oder Einformen von Vertiefungen stattfinden.

Wird z.B. als Leitkabel eine Gradientenindexfaser oder Monomodefaser mit fester oder loser Ummantelung verwendet, so hat dieses Leitkabel einen Durchmesser von etwa 0,5-1,5 mm. Wird dieses Leitkabel in einem Leerrohr mit einem Rohrinnendurchmesser von 3-7 mm geführt und der anzuwendende Druck der Pressluft bei bis zu 50 bar gehalten, so beträgt die Eintrittsgeschwindigkeit der Faser in das Leerrohr 1-2 m pro Sekunde. Es hat sich herausgestellt, dass weder die Anzahl der Krümmungen eines Hauptkabels noch deren Krümmungsradien von Bedeutung sind, sofern dieser Radius ein bestimmtes Mass nicht unterschreitet, welches jedoch weit unter dem beim Verlegen von Hauptkabeln vorgeschriebenen Mass liegt.

Eine Vorrichtung zum Einbringen eines Leitkabels in ein Hauptkabel, welche insbesondere bei der Durchführung des oben geschilderten Verfahrens Anwendung finden soll, sieht vor, dass in dem Hauptkabel das Leerrohr angeordnet und an einem mit einem Führungsmedium beaufschlagbaren Auslauf angeschlossen ist. Dieser Auslauf steht wiederum mit einem Gehäuse bzw. Druckgefäss in Verbindung, in welchem sich das Leitkabel auf einer Rolle aufgewickelt befindet. An der Vorrichtung bzw. dem Auslauf sind Einrichtungen zum Beaufschlagen mit Druck sowie hierzu gehörige Druckregelelemente vorgesehen.

Die Role soll um eine Achse drehbar gelagert und über ein Handrad sowie Eingriffs- und Bremselemente steuerbar sein. Das Gehäuse selbst wird mit einem Deckel verschlossen und ist mittels einer Ringdichtung abgedichtet. Zur Kontrolle des Leitkabellaufs soll an dem Gehäuse ein Schauglas angeordnet sein.

Diese Vorrichtung ermöglicht auf einfache Art und Weise ein Führen des Leitkabels in dem Leerrohr. Soll z.B. ein Leitkabel durch ein anderes ersetzt werden, so wird das Leerrohr von der Gegenseite mit Druck beaufschlagt, wobei die Fäden oder sonstigen Vorsprünge oder Eindrücke wiederum als Barrieren wirken. Dies wäre z.B. bei um das Leitkabel angeordneten Schirmchen oder widerhakenähnlich aufklappbaren Flügelchen, an welche auch im Rahmen der Erfindung gedacht ist, nicht möglich.

Weitere Vorteile der Erfindung ergeben sich aus der nachfolgenden Beschreibung eines bevorzugten Ausführungsbeispiels sowie anhand der Zeichnung; diese zeigt in:

Fig. 1: einen Querschnitt durch ein Energiekabel mit Spannungsleitern in Form eines Dreileiter-Mittelspannungskabels;

Fig. 2: einen Querschnitt durch eine andere Ausführugnsform eines Dreileiter-Mittelspannungskabels;

Fig. 3: eine vereinfachte Darstellung eines Lichtleiterkabels im Längsschnitt;

Fig. 4: eine schematische Darstellung einer Vorrichtung zum Einbringen des Lichtleiterkabels in das Energiekabel;

Fig. 5: den vergrösserten Schnitt durch Fig. 4 nach deren Linie V-V.

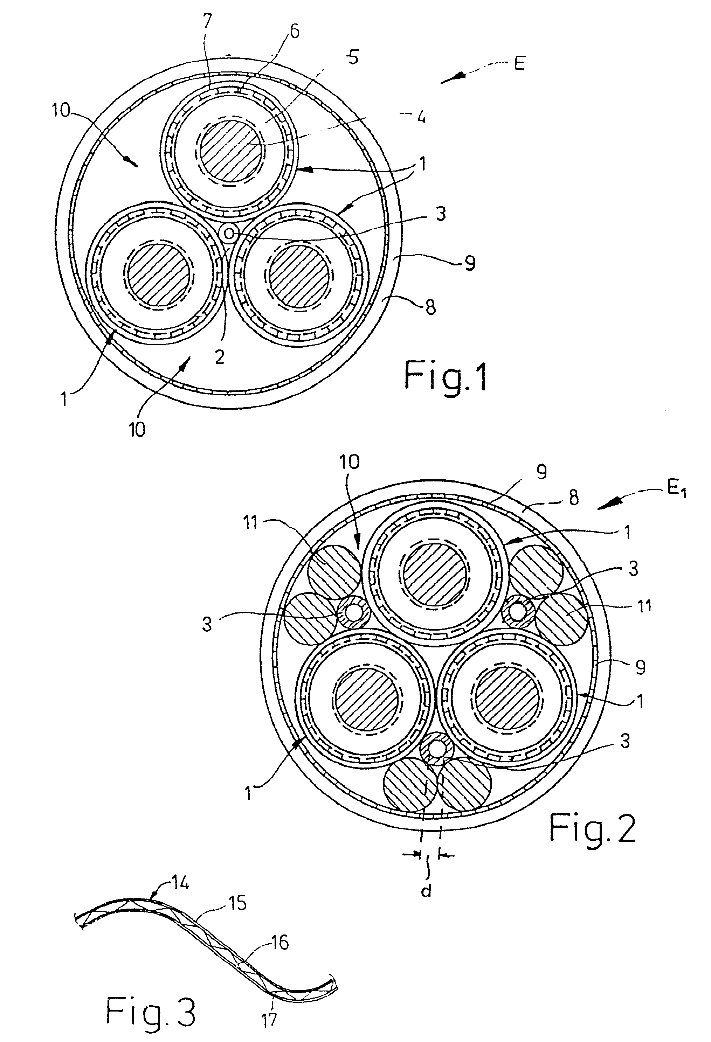

In einem Dreileiter-Mittelspannungskabel E — im folgenden auch als Hauptkabel bezeichnet — sind gemäss Fig. 1 Leiter 1 — im Kabelquerschnitt gesehen — an den Ecken eines Dreiecks angeordnet und von einem Kabelmantel 8 mit einer Kabelarmierungen 9 enthaltenden Innenschicht umgeben. In einem von diesen Leitern 1 begrenzten zentrischen Hohlraum 2 verläuft ein Leerrohr 3 aus Kunststoff.

Jeder Leiter 1 weist einen Leiterkern 4, beispielsweise einen Kupferdraht auf, der von Isolationsmaterial 5 umgeben ist. Letzteres wird von einer mit Armierungseinlagen 6 versehenen Kunststoffhülle 7 umschlossen.

Beim Ausführungsbeispiel des Dreileiter-Mittelspannungskabels $E_1$ der Fig. 2 sind zum Abstützen des Kabelmantels 8 in von je zwei Leitern 1 begrenzten Spickeln 10 je zwei Beiläufe 11 eingezogen. Zwischen diesen und den Leitern 1 verlaufen Leerrohre 3.

Die Leerrohre 3 mit einem Innendurchmesser d von 3 bis 7 mm dienen der Aufnahme einer oder mehrerer zu Lichtleiterkabeln 14 geformten Glasfasern von etwa 0,5 bis 1,5 mm Faserdurchmesser, die beim Ausführungsbeispiel der Fig. 3 von einem Kunststoffmantel 15 umschlossen sind. Um das Lichtleiterkabel 14 sind zwei gegensinnig laufende Fäden 16 und 17 gesponnen. Bei nicht gezeigten Ausführungsbeispielen können statt dieser Fäden 16, 17 oder zusätzlich zu ihnen andere die Oberfläche des Lichtleiterkabels vergrössernde Elemente vorgesehen sein, beispielsweise Ausformungen oder Eindrücke.

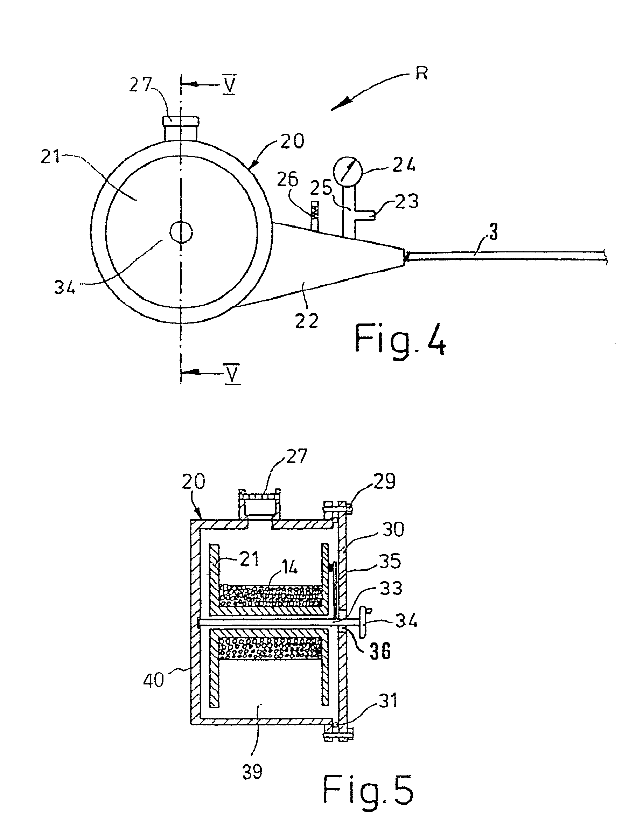

Zum Einbringen des Lichtleiterkabels 14 in das Leerrohr 3 dient eine Einblasvorrichtung R. Diese besteht nach den Fig. 3, 4 im wesentlichen aus einem als Druckgefäss ausgebildeten Gehäuse 20 zur Aufnahme einer Trommel 21 mit Lichtleiterkabel 14 sowie einem trichterförmigen Auslauf 22, an den das Leerrohr 3 angeschlossen wird. Die gesamte Vorrichtung R oder auch nur der Auslauf 22 ist mit Pressluft beaufschlagbar, welche durch einen Stutzen 23 sowie eine mit Manometer 24 versehene Leitung 25 in den Auslauf 22 gelangt. Ein möglicher Überdruck wird durch ein Sicherheitsventil 26 abgebaut. Zur Kontrolle der Trommel 21 ist im Gehäuse 20 ein Schauglas angeordnet, durch welches der Gehäuseraum 39 betrachtet werden kann.

Zum Auswechseln der Trommel 21 werden Verbindungselemente 29 gelöst, die einen Deckel 30 sowie eine zwischen Deckel 30 und Gehäuse 20 vorgesehene Ringdichtung 31 freigeben.

Die Trommel 21 wird von einer in einer Gehäusewand 40 gelagerten Achse 33 durchsetzt, welche ausserhalb des Gehäuses 20 mit einem Handrad 34 zum manuellen Drehen der Trommel 21 versehen ist.

Mit der Achse 33 sind als Mitnehmer ausgebildete Eingriffs- oder Bremselemente 35 zum Bewegen oder Abbremsen der Rolle 21 verbunden. Zwischen Deckel 30 und Achse 33 ist eine druckfeste Dichtung 36 vorgesehen.

Ein in das Leerrohr 3 eingesetztes Lichtleiterkabel 14 aus Glasfasern wird nach dem Öffnen des Stutzens 23 mittels Druckluft im Leerrohr 3 transportiert, wobei der anzuwendende Druck maximal 50 bar beträgt und die Eintrittsgeschwindigkeit des Lichtleiterkabels 14 1 bis 2 m/sec. Die beschriebenen Fäden 16, 17 oder die entsprechenden Ausformungen oder Eindrücke dienen als zusätzliche Angriffsflächen für die Druckluft.

Da auf die Lichtleiterkabel 14 keine örtliche Zugkraft ausgeübt wird, jene vielmehr durch kontinuierlichen Schub in einem Luftkissen gleiten, wird eine Beschädigung der Faser vermieden.

## Patentansprüche

1. Kabel mit Kabelmantel, insbesondere Energiekabel mit zumindest einem elektrischen Leiter und diesen umgebendem Isoliermantel, vor allem Dreileiter-Mittelspannungskabel mit von den drei Leitern begrenztem Hohlraum, dadurch gekennzeichnet, dass in dem Kabel oder Hauptkabel (E, E₁), insbesondere neben dem Leiter (1), zumindest ein Leerrohr (3) verläuft.

2. Kabel nach Anspruch 1, dadurch gekennzeichnet, dass das Leerrohr (3) im Hohlraum (2) zwischen den Leitern (1) oder in einem zwischen Leiter und wenigstens einem Beilauf (11) gebildeten Hohlraum verläuft, bevorzugt in einem Hohlraum zwischen dem Leiter und zwei Beiläufen (11) geführt ist.

3. Kabel nach Anspruch 1 oder 2, dadurch gekennzeichnet, dass das Leerrohr (3) einen Innendurchmesser d von 3 bis 7 mm aufweist und aus Polyamid besteht.

4. Verfahren zum Einbringen eines Leitkabels, insbesonderes Lichtleiterkabels, in das Kabel nach einem der Ansprüche 1-3, dadurch gekennzeichnet, dass ein Ende des Leitkabels (14) in ein Leerrohr (3) des Energiekabels eingeführt und das Leitkabel anschliessend mittels eines Strömungsmediums transportiert wird.

5. Verfahren nach Anspruch 4, dadurch gekennzeichnet, dass die Oberfläche des Leitkabels (14) vor dem Einführen in das Leerrohr (3) vergrössert und das Strömungsmedium gegen diese Oberfläche geführt wird, wobei das Strömungsmedium bevorzugt mit einem Druck bis zu 50 bar in das Leerrohr eingebracht wird bei einer bevorzugten Eintrittsgeschwindigkeit von 1 bis 2 m/sec.

6. Verfahren nach Anspruch 4 oder 5, dadurch gekennzeichnet, dass das Lichtleiterkabel (14) im wesentlichen aus einer oder mehreren Glasfaser(n) besteht und bevorzugt mit Fäden umsponnen ist, die gegebenenfalls gegenläufig gerichtet sind.

7. Verfahren nach Anspruch 4 oder 5, dadurch gekennzeichnet, dass die Glasfaser selbst oder eine sekundäre Ummantelung (fester oder loser Glasfasertyp) oder ein mehrere Glasfasern umfangender Kunststoffmantel (15) mit die Oberfläche vergrössernden Elementen (16, 17), bevorzugt Ausformungen oder Eindrücken, versehen ist.

8. Verfahren nach Anspruch 4 oder 5, dadurch gekennzeichnet, dass das Leitkabel (14) mittels Druckluft oder mittels einer Flüssigkeit durch das Leerrohr (3) geführt wird.

9. Vorrichtung zur Durchführung des Verfahrens nach einem der Ansprüche 4 bis 8, gekennzeichnet durch ein Druckgefäss, dessen dichtes Gehäuse (20) eine Trommel (21) für ein Leitkabel, insbesonderes Lichtleiterkabel (14), umgibt sowie einen Auslauf (22) aufweist, der dicht mit dem Leerrohr (3) verbindbar ist.

10. Vorrichtung nach Anspruch 9, dadurch gekennzeichnet, dass der Auslauf (22) und/oder das Gehäuse (20) wenigstens einen Einführstutzen (23) mit Druckregelelementen (Manometer 24 oder Sicherheitsventil 26) für ein Strömungsmedium aufweisen.

11. Vorrichtung nach Anspruch 9 oder 10, dadurch gekennzeichnet, dass die Trommel (21) an einer das Gehäuse (20) durchsetzenden Achse (33) angeordnet und der Trommel wenigstens ein Bremselement (35) zugeordnet ist, wobei gegebenenfalls das Gehäuse (20) mit einem Deckel (30) verschlossen ist, der mit einer Ringdichtung (31) dem Gehäuse dicht anliegt, welches bevorzugt ein Schauglas (27) zur Kontrolle des Leitkabels (14) aufweist.

## Claims

1. A cable with cable covering, especially a power cable provided with at least one electric conductor and an insulating covering surrounding the conductor, in particular a three-core cable of medium voltage having a cavity limited by the three conductors, characterized in that at least one empty tube (3) runs in the cable or main cable (E, E₁), especially adjacent to the conductor (1).

2. A cable according to claim 1, characterized in that the empty tube (3) runs in the cavity (2) between the conductors (1) or in the cavity formed by the conductor and at least one filler (11), preferably in a cavity between the conductor and two fillers (11).

3. A cable according to claim 1 or 2, characterized in that the empty tube (3) has an inside diameter of 3 to 7 mm and consists of polyamide.

4. A method for introducing a communication cable, especially an electric light-communication cable, into the cable according to any of the claims 1 to 3, characterized in that one end of the communication cable (14) is introduced into an empty tube of the power cable and that the communication cable is subsequently transported by means of a flow medium.

5. A method according to claim 4, characterized in that the surface of the communication cable (14) is enlarged prior to being introduced into the empty tube (3) and that the flow medium is conducted towards this surface, with the flow medium being introduced into the empty tube, preferably at a pressure of up to 50 bar and at a preferred entrance velocity of 1 to 2 m/sec.

6. A method according to claim 4 or 5, characterized in that the communication cable (14) essentially consists of one or several glass fibre(s) and is preferably braided with threads which are possibly directed opposed.

7. A method according to claim 4 or 5, characterized in that the glass fibre itself or a secondary casing (fixed or losse glass fiber type) or a synthetic covering (15) surrounding several glass fibres is provided with elements (16, 17) enlarging the surface, preferably projections or cavities.

8. A method according to claim 4 or 5, characterized in that the communication cable (14) is conducted through the empty tube (3) by means of compressed air or a liquid.

9. A device for carrying out the method according to one of the claims 4 to 8, characterized in that a pressure vessel, the sealed casing (20) of which surrounds a drum (21) for a communication cable (14), preferably an electric light-communication cable, is provided with an outlet (22) which can be connected tightly with the empty tube (3).

10. A device according to claim 9, characterized in that the outlet (22) and/or the casing (20) is/are provided with at least one leading-in muff (23) having pressure regulators (manometer 24 or safety valve 26) for a flow medium.

11. A device according to claim 9 or 10, characterized in that the drum (21) is located at an axis (33) permeating the casing (20) and in that the drum comprises at least one brake element (35) with the casing (20) possibly being closed with a lid (30) which sits close to the casing by means of a ring sealing (31), the casing being preferably provided with an inspection glass (27) for controlling the communication cable (14).

## Revendications

1. Câble couvert d'une gaine de câble, en particulier câble d'énergie, pourvu d'au moins un conducteur électrique et d'une chemise isolant celui-ci, en première ligne câble de tension moyenne à trois conducteurs, contenant une cavité limitée par les trois conducteurs, caractérisé en ce qu'au moins un tube vide (3) est établi dans le câble ou câble principal (E, $E_1$), en particulier près du conducteur (1).

2. Câble selon la revendication 1, caractérisé en ce que le tube vide (3) est établi dans la cavité (2), entre les conducteurs (1) ou dans une cavité formée par le conducteur et au moins un bourrage (11), de préférence dans une cavité entre le conducteur et deux bourrages (11).

3. Câble selon la revendication 1 ou 2, caractérisé en ce que le tube vide (3) présente un diamètre intérieur d de 3 à 7 mm et se compose d'un polyamide.

4. Procédé pour mettre en place un câble conducteur, en particulier un câble conducteur de lumière, dans le câble selon l'une des revendications 1 à 3, caractérisé en ce que l'extrémité du câble conducteur (14) est introduite dans un tube vide (3) du câble d'énergie, et que le câble conducteur est transporté ensuite par un fluide coulant.

5. Procédé selon la revendication 4, caractérisé en ce que la surface du câble conducteur est élargie avant l'introduction dans le tube vide (3), et que le fluide coulant est conduit vers cette surface, à l'occasion de quoi le fluide coulant est introduit dans le tube vide d'une compression préférée jusqu'à 50 bar et d'une vitesse d'introduction préférée de 1 à 2 m/sec.

6. Procédé selon la revendication 4 ou 5, caractérisé en ce que le câble conducteur de lumière (14) se compose pour l'essentiel d'une ou de plusieurs fibre(s) de verre et que ce câble est de préférence guipé de fils qui sont, le cas échéant, alignés contrairement.

7. Procédé selon la revendication 4 ou 5, caractérisé en ce que la fibre de verre même ou un revêtement secondaire (du type de vibre de verre serré ou desserré) ou une enveloppe de matières synthétiques (15) entourant plusieurs fibres de verre est pourvu d'éléments (16, 17) élargissant la surface, de préférence de saillies ou de cavités.

8. Procédé selon la revendication 4 ou 5, caractérisé en ce que le câble conducteur (14) est transporté par le tube vide (3) au moyen d'air comprimé ou au moyen d'un liquide.

9. Dispositif pour la mise en œuvre du procédé selon l'une des revendications 4 à 8, caractérisé en ce qu'un récipient de pression, dont le boîtier étanche (20) entoure un tambour (21) pour un câble conducteur, en particulier un câble conducteur de lumière (14), et présente une sortie (22) qui peut être reliée d'une manière étanche au tube vide (3).

10. Dispositif selon la revendication 9, caractérisé en ce que la sortie (22) et/ou le boîtier (20) présentent au moins une tubulure d'entrée (23) pourvue d'éléments de réglage de pression (manomètre 24 ou soupape de sûreté 26) pour un fluide coulant.

11. Dispositif selon la revendication 9 ou 10, caractérisé en ce que le tambour (21) est disposé sur un axe (33) traversant le boîtier (20), et que le tambour comprend au moins un élément de freinage (35), à l'occasion de quoi le boîtier est fermé, le cas échéant, d'un couvercle (30) adhérant uniformément au boîtier par une rondelle de joint (31), le boîtier présentant de préférence un verre indicateur (27) pour le contrôle du câble conducteur (14).

Fig.1

Fig.2

Fig.3

Fig. 4

Fig. 5